Europäisches Patentamt

European Patent Office

Office européen des brevets

(11) Veröffentlichungsnummer: **0 216 359**
**A2**

(12) **EUROPÄISCHE PATENTANMELDUNG**

(21) Anmeldenummer: 86113094.6

(22) Anmeldetag: 23.09.86

(51) Int. Cl.⁴: **H04M 3/36** , H04Q 3/545

(30) Priorität: 26.09.85 DE 3534335

(43) Veröffentlichungstag der Anmeldung:
01.04.87 Patentblatt 87/14

(84) Benannte Vertragsstaaten:
AT BE CH DE FR GB IT LI NL SE

(71) Anmelder: **Siemens Aktiengesellschaft Berlin
und München
Wittelsbacherplatz 2
D-8000 München 2(DE)**

(72) Erfinder: **Ott, Gerhard, Dipl.-Ing.
Espenweg 7
D-8011 Kirchheim(DE)**
Erfinder: **Martin, Karl-Heinz
Guardinistrasse 109
D-8000 München 70(DE)**
Erfinder: **Thomas, Harald, Dipl.-Ing.
6606 Thorntonhill Court
Boca Raton, FI 33433(US)**

(54) **Verfahren zur Verhinderung einer Überlastung der Zentralsteuerung eines rechnergesteuerten Vermittlungssystems.**

(57) Bei Erreichen einer vorgegebenen maximalen Anzahl (n max)) von belegten Verbindungsspeichern aus der Gesamtzahl (n) der zum Aufbau von Verbindungen verfügbaren Verbindungsspeichern werden keine Neubelegungen mehr angenommen. Erst wenn eine vorgegebene minimale Anzahl (n (min)) von belegten Verbindungsspeichern erreicht ist, werden wieder Neubelegungen zugelassen.

## FIG 2

n

n(max) ——► Anfang der Überlast

n(min) ——► Ende der Überlast

0

EP 0 216 359 A2

# Verfahren zur Verhinderung einer Überlastung der Zentralsteuerung eines rechnergesteuerten Vermittlungssystems.

Die Erfindung betrifft eine Verfahren zur Verhinderung einer Überlastung der Zentralsteuerung eines rechnergesteuerten Vermittlungssystems.

Die Zentralsteuerung rechnergesteuerter Vermittlungssystem arbeitet bis zu relativ hohen Belastungen wirkungsvoll. Wenn das Belegungsangebot aber eine bestimmte Höhe übersteigt, kommt es entweder zu einer stark verminderten . Leitungsfähigkeit, oder zu einem Totalausfall infolge innerer Blockierung. Mit Hilfe einer Überlastabwehr soll das Eintreten solcher Fälle verhindert werden. Es ist allerdings schwierig, geeignete Parameter zu finden, die zuverlässige Vorhersagen über das Überschreiten der maximalen Beanspruchung der Zentralsteuerung ermöglichen.

In dem Aufsatz "Dynamische Überlastabwehrstrategie für speicherprogrammierte Vermittlungssysteme" in "Elektrisches Nachrichtenwesen", Band 55, Nr. 1, 1980, Seiten 37 bis 45, ist beispielsweise eine dynamische Überlastabwehrstrategie beschrieben. Bei dieser Überlastabwehr wird innerhalb eines Belegungsannahmeintervalls die Anzahl akzeptierbarer Belegungsversuche begrenzt. Aufgrund der Beanspruchung der Steuerung während eines Parameterbeobachtungsintervalls, das einige Belegungsannahmeintervalle umfaßt, wird ein Wert N ermittelt. Durch diesen wird festgelegt, wieviel neue Belegungsversuche in den Belegungsannahmeintervallen des nächsten Parameterbeobachtungsintervalles akzeptiert werden. N kann nur bis einem festgelegten Maß zu-oder abnehmen. Zusätzliche Parameter verhindern sein zu starkes Absinken. Dieses Verfahren der bedämpften Veränderung der Annahme von Belegungen soll gewährleisten, daß Wartesystem für Rechnerzeit und Betriebsmittel der Zentralsteuerung nicht zu überfordern. Es setzt allerdings voraus, daß der Rechner über genügend Kapazität verfügt, alle bereits akzeptierten Belegungen bearbeiten zu können. Das diese intern durchaus noch einen wachsenden Speicherplatzbedarf haben können, müssen Sicherheitsreserven vorhanden sein, da sonst eine Blockierung der Steuerung erfolgt, die einen Neustart des Rechners bei Verlust aller vorher gespeicherten Daten notwendig machen würde.

Aufgabe der vorliegenden Erfindung ist es, eine Überlastabwehr anzugeben, die sich durch eine unaufwendige Funktionsweise auszeichnet, und bei der die Gefahr einer Überlastung relativ einfach erkannt wird.

Diese Aufgabe wird für ein Verfahren der Eingangs genannten Art erfindungsgemäß dadurch gelöst, daß nach Erreichen einer vorgegebenen maximalen Anzahl von belegten Verbindungsspeichern aus der Gesamtzahl der zum Aufbau von Verbindungen verfügbaren Verbindungsspeichern solange keine Neubelegungen erfolgen bis eine vorgegebene minimale Anzahl von belegten Verbindungsspeichern erreicht ist.

Die Vorteile des erfindungsgemäßen Verfahrens liegen in seiner einfachen Handhabung und darin, daß zur Erkennung einer drohenden Überlastung der Zentralsteuerung lediglich ein Parameter, nämlich die Anzahl der beleg ten Verbindungsspeicher, notwendig ist.

Weitere zweckmäßige Ausgestaltung des erfindungsgemäßen Verfahrens ergeben sich aus den Unteransprüchen sowie aus der nachfolgenden Beschreibung des Verfahrens.

Nachfolgend soll das erfindungsgemäße Verfahren anhand zweier Figuren näher erläutert werden.

Es zeigen

FIG 1 den prinzipiellen Aufbau eines rechnergesteuerten Vermittlungssystems, und

FIG 2 anhand einer Graphik Beginn und Ende der Überlastabwehr in Abhängigkeit von den zur Verfügung stehenden Verbindungsspeichern.

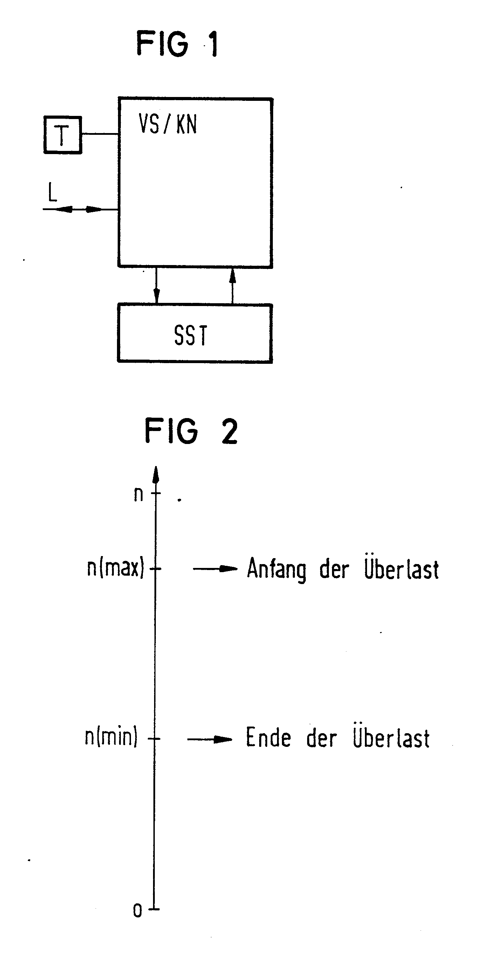

Gemäß FIG 1 besteht ein rechnergesteuertes Vermittlungssystem im wesentlichen aus der Peripherie VS/KN und der Systemsteuerung SST. Die Peripherie VS/KN setzt im wesentlichen aus den Verbindungssätzen und den Koppelnetzwerken zusammen. Daran angeschlossen sind die Teilnehmer T und Verbindungsleitungen L. Die Peripherie steht über Datenübertragungsleitungsbündeln mit der Systemsteuerung SST in Verbindung. Die Systemsteuerung ist hinsichtlich der vermittlungstechnischen, betriebstechnischen und sicherheitstechnischen Ablaufverfahren in erster Linie nach Aufgabenkomplexen gegliedert, und zwar in die Organisationstechnik, die Vermittlungstechnik mit Peripherietechnik und Leitungstechnik, sowie in die Betriebstechnik und die Sicherheitstechnik.

Die Organisationstechnik koordiniert alle Aktivitäten in den Systemprozessoren. Die Vermittlungstechnik mit ihrer Peripherietechnik und ihrer Leitungstechnik bearbeiten die vermittlungstechnischen Prozesse. Dabei steuert die Peripherietechnik den Verkehr mit der vermittlungstechnischen Peripherie und ist daher in erster Linie gerätespezifisch. Die von den Geräten kommenden physikalischen Signale werden in vermittlungstechnisch bedeutsame Anreize umgewandelt und in Ausgaberichtung zerlegt in vermittlungstechnische Befehle und in gerätespezifische Einstellfolgen. Mit Hilfe der Leitungstechnik werden bei Leitungssätzen die signalisierungsspezifischen Abläufe realisiert.

Die Betriebstechnik unterstützt die Systemverwaltung und die Systemwartung, während die Sicherheitstechnik der Fehlererkennung, Fehlerlokalisierung und der Ersatzschaltung im System dient.

Abhängig vom Umfang der Leistungsmerkmale, die das Speichervolumen bestimmen und von der Anlagengröße, die die dynamische Belastung bestimmt, sind diese Anlagen mit einem oder mehreren Prozessoren ausgestattet. Bei Einzelprozessoranlagen bedeutet dies, daß sich Organisationssteuerung und Verbindungssteuerung in einem Prozessor befinden, in Mehrprozessoranlagen dagegen werden die Steuerfunktionen aufgeteilt.

Daher verfügt jedes Vermittlungssystem über eine bestimmte Anzahl von Verbindungsspeichern die zum Aufbau von Verbindungen verfügbar sein müssen. Gemäß FIG 2 wird davon ausgegangen, daß die hier beschriebene Anlage insgesamt verfügbare Verbindungsspeicher aufweisen soll. Die dynamische Belastung des Vermittlungssystems wird über die Verfügbarkeit dieser Verbindungsspeicher gemessen.

Erfindungsgemäß wird nun ein oberer Schwellwert n (max) festgelegt, bei der die Überlastabwehr gestartet wird. Des weiteren wird ein unterer Schwellwert n (min) festgelegt, bei welchem die Überlastabwehr endet. Erfindungsgemäß besteht die Überlastabwehr darin, daß nach Erreichen einer vorgegebenen maximalen Anzahl n (max) von belegten Verbindungsspeichern aus der Gesamtzahl n der zum Aufbau von Verbindungen verfügbaren Verbindungsspeichern keine Neubelegungen mehr erfolgen. Dabei ist der obere Schwellwert so bemessen, daß noch genügend Verbindungsspeicher vorhanden sind um eventuelle Anforderungen von bestehenden Verbindungen gerecht zu werden. Die beiden Schwellwerte können über Programme der Betriebstechnik beliebig eingestellt bzw. verändert werden.

Das Erreichen des oberen Schwellwertes wird der Sicherheitstechnik gemeldet, die dann in einzelnen Steuerungsgruppen das Merkmal "Überlast" setzt. Dadurch wird erreicht, daß keine von der Peripherietechnik gemeldeten Neubelegungen an die Vermittlungstechnik weitergereicht werden. Entsprechend einer Ausgestaltung des erfindungsgemäßen Verfahrens können davon Belegungen von Röchelteilnehmern oder Amtsleitungen ausgenommen werden. Für die Dauer der Überlast wird kein Wartesystem realisiert. Neubelegungen werden vom System erst wieder dann angenommen, wenn die Anzahl der belegten Verbindungsspeicher den minimalen Wert n (min) erreicht hat.

Wird der untere Schwellwert erreicht, so wird dies der Sicherheitstechnik gemeldet, die daraufhin das gesetzte Merkmal "Überlast" löscht. Gleichzeitig überwacht die Sicherheitstechnik die zeitliche Dauer der Überlast. Bei Überschreitung einer vorgegebenen Überwachungszeit vor Erreichen des unteren Schwellwertes, wird von der Sicherheitstechnik ein Soft-Restart des Vermittlungssystems veranlaßt. Das bedeutet, daß alle im Moment bestehenden Zweiergespräche bestehen bleiben, alle dabei nicht benötigten Anlagenteile aber in einen definierten Null-Zustand überführt werden. Handelt es sich dabei um ein Vermittlungssystem mit einer gedoppelten Steuerung, so wird nach Ablauf der Überwachungszeit vor Erreichen des unteren Schwellwertes die gesamte Steuerung umgeschaltet.

## Ansprüche

1. Verfahren zur Verhinderung einer Überlastung der Zentralsteuerung eines rechnergesteuerten Vermittlungssystems, **dadurch gekennzeichnet**, daß nach Erreichen einer vorgegebenen maximalen Anzahl von belegten Verbindungsspeichern (n (max)) aus der Gesamtzahl der zum Aufbau von Verbindungen verfügbaren Verbindungsspeichern (n) solange keine Neubelegungen erfolgen bis eine vorgegebene minimale Anzahl von belegten Verbindungsspeichern (n (min)) erreicht ist.

2. Verfahren nach Anspruch 1, **dadurch gekennzeichnet**, daß die Werte der maximalen Anzahl sowie der minimalen Anzahl der Verbindungsspeicher mit Hilfe der Betriebstechnik einstellbar sind.

3. Verfahren nach Anspruch 1, **dadurch gekennzeichnet**, daß nach Erreichen der maximalen Anzahl (n (max)) die zeitliche Dauer der Überlast überwacht wird, und daß nach Ablauf der Überwachungszeit und vor Erreichen der minimalen Anzahl (n) (min)) das Vermittlungssystem in einen definierten Zustand überführt wird.

# FIG 1

# FIG 2